# EUROPÄISCHE PATENTSCHRIFT

(11) **EP 1 607 597 B1**
(45) Veröffentlichungstag und Bekanntmachung des Hinweises auf die Patenterteilung: **30.05.2007**
(21) Anmeldenummer: 05008129.8
(22) Anmeldetag: 14.04.2005
(51) Int. Cl.: F01N 7/08, F01N 3/05, F01N 7/18

(54) **Abgasanlage**
Exhaust system
Dispositif d'échappement

(30) Priorität: 08.06.2004 DE 102004027891
(43) Veröffentlichungstag der Anmeldung: 21.12.2005
(73) Patentinhaber: Dr. Ing. H.C.F. Porsche Aktiengesellschaft, 70435 Stuttgart (DE)
(72) Erfinder: Storz, Eberhard, 74366 Kirchheim (DE); Stromsky, Roland-Gerhard, 71691 Freiberg (DE)

(56) Entgegenhaltungen:
- DE-A1- 10 136 350
- DE-A1- 19 940 102
- US-A- 2 850 314
- US-A- 4 907 666
- US-A1- 2003 121 722
- PATENT ABSTRACTS OF JAPAN Bd. 015, Nr. 276 (M-1135), 12. Juli 1991 (1991-07-12) & JP 03 096434 A (NISSAN MOTOR CO LTD; others: 01), 22. April 1991 (1991-04-22)
- PATENT ABSTRACTS OF JAPAN Bd. 007, Nr. 199 (M-240), 3. September 1983 (1983-09-03) & JP 58 098621 A (HONDA GIKEN KOGYO KK), 11. Juni 1983 (1983-06-11)
- PATENT ABSTRACTS OF JAPAN Bd. 2000, Nr. 21, 3. August 2001 (2001-08-03) & JP 2001 090530 A (CALSONIC KANSEI CORP), 3. April 2001 (2001-04-03)

## Beschreibung

Die Erfindung bezieht sich auf eine Abgasanlage für einen Kraftfahrzeugmotor nach dem Oberbegriff des Anspruchs 1.

Ein Problem bei Abgasendrohren einer Abgasanlage für Kraftfahrzeugmotoren, welche in einer so genannten Pelle, d.h. in einem Heckabschlussteil aus einem Kunststoff angeordnet sind, besteht darin, dass zum einen die Pelle nicht durch Erhitzung des Abgasendrohrs verformt wird und zum anderen soll das Abgasendrohr lagegenau trotz Erwärmung der Abgasanlage positioniert in der Pelle gehalten werden.

Aus der JP 03096434 ist eine Abgasanlage für ein Kraftfahrzeug bekannt, die beabstandet und abgestützt in der Heckverkleidung angeordnet ist und ein Abgasendrohr umfasst, das innerhalb der Heckverkleidung angeordnet ist und das Abgasendrohr mit einem Wellschlauch verbunden ist.

Dieses Problem wird durch die Merkmale des Anspruchs 1 gelöst. Weitere vorteilhafte Merkmale beinhalten die Unteransprüche.

Die mit der Erfindung hauptsächlich erzielten Vorteile bestehen darin, dass das Abgasendrohr relativ kalt gehalten wird und die Erwärmung nicht die Pelle verformen kann und des weiteren werden durch das Abgasendrohr durch ein stromauf zwischengeschaltetes Wellrohr oder durch einen Wellschlauch Wärmeausdehnungen der Abgasanlage vom Abgasendrohr ferngehalten. Dies wird erreicht, indem das Abgasendrohr einen als Venturirohr mit Fremdluftzuführung ausgebildeten Rohrabschnitt aufweist, an den sich stromauf ein Wellrohr oder ein Wellschlauch anschließt, der mit einem Abgaseingangsrohr der Abgasanlage verbunden ist. Die Fremdluftzuführung kann über ringförmig angeordnete Lufteintrittsöffnungen im Abgasendrohr im Venturibereich erfolgen.

Nach einer weiteren Ausführung kann die Fremdluftzuführung auch über ein eingeführtes Luftleitrohr erfolgen, das mit einer lufterzeugenden Pumpe verbunden ist. Hierdurch wird eine Erwärmung des Abgasendrohres durch Zuführung von kalter Fremdluft vermieden, sei es selbsttätig durch einen Venturieffekt oder zwangsweise durch eingepumpte Fremdluft oder in einer Kombination durch eingepumpte Fremdluft und durch die Luftzuführung nach dem Venturiprinzip.

Das Abgasendrohr ist in einem rohrförmigen Aufnahmeelement der Heckverkleidung mit einem Luftspaltraum über Distanzhalter gelagert, wobei zwischen dem Abgasendrohr und dem aufbauseitigen Aufnahmeelement die Lufteintrittsöffnungen in Verbindung mit dem Luftspaltraum stehen. Die Distanzhalter behindern die Luftführung nicht, so dass nach dem Venturiprinzip angesogene kalte Frischluft über die Luftleitöffnungen dem Abgasstrom zuführbar ist und somit dieser eine verminderte Wärme aufweist und das Abgasendrohr nicht so heiß wird, dass das Heckverkleidungsteil verformt wird. Das Abgasendrohr kann aus Materialien, wie Leichtmetall, CFK bestehen. Durch die Zuführung von der Frischluft wird sowohl eine Innenkühlung durch Zumischen von kalter Frischluft als auch eine Außenkühlung durch die Frischluft erzielt.

Durch die Zwischenschaltung des Wellrohrs oder Wellschlauches zwischen dem Abgasendrohr und dem Abgaseintrittsrohr kann eine Wärmeausdehnung des Abgaseingangsrohres bzw. der Abgasanlage kompensiert werden, so dass das Abgasendrohr keine axiale Verschiebung aus der Pelle bzw. dem Heckverkleidungsteil heraus durchführen kann.

Die Lufteintrittsöffnungen werden über eine von einer Pumpe erzeugten Fremdluft mittels eines Luftleitrohres beaufschlagt, das durch das rohrförmige Aufnahmeelement der Heckverkleidung hindurchragt und deren Mündungsöffnung den Lufteintrittsöffnungen von außen zugerichtet ist. Hierdurch wird in vorteilhafter Weise nach der Erfindung eine mittelbare Fremdluftzuführung in den Abgasstrom in Kombination mit dem Venturieffekt erzielt.

Nach einer weiteren Ausführung der Erfindung ist vorgesehen, dass eine Fremdluftzuführung in das Abgasendrohr ohne Lufteintrittsöffnungen nur über das Luftleitrohr erfolgt, das mit einer lufterzeugenden Pumpe verbunden ist und die Mündungsöffnung des Luftleitrohres stromauf einer Venturiverengung im Abgasendrohr und in der Längsachse des Abgasendrohres angeordnet ist. Hierdurch wird eine unmittelbare Fremdluftzuführung in den Abgasstrom erzielt, wobei durch den Venturieffekt die kalte Fremdluft mit dem Abgasstrom mitgerissen wird.

Ein Ausführungsbeispiel der Erfindung ist in den Zeichnungen dargestellt und wird im folgenden näher beschrieben.

Es zeigt
- Fig. 1: eine Ausführung eines in einer Pelle eines Heckabschlussteils angeordneten Abgasendrohres mit über ein zwischengeschaltetes Wellrohr oder Wellschlauch verbundenes Abgaseintrittsrohr, wobei gestrichelt eine Variante mit mittelbarer Fremdluftzuführung eingezeichnet ist, und
- Fig. 2: eine weitere Ausführung eines in einer Pelle eines Heckabschlussteils angeordneten Abgasendrohres mit unmittelbarer Fremdluftzuführung über ein Lufteintrittsrohr.

Eine Abgasanlage 1 für einen Kraftfahrzeugmotor umfasst u.a. ein Abgasendrohr 2; 3, welches in einem Heckabschlussteil bzw. Heckverkleidungsteil 4 eines Fahrzeugaufbaus fest über Distanzhalter 5 in einer Rohrhülse oder in einem rohrförmigen Aufnahmeelement 6 gehalten und über ein Flanschteil 7 fest mit dieser Aufnahme 6 verbunden ist.

Mit dem Abgasendrohr 2; 3 ist stromauf ein Wellrohr 8 oder ein Wellschlauch verbunden, der wiederum mit einem Abgaseintrittsrohr 9 der Abgasanlage 1 verbunden ist.

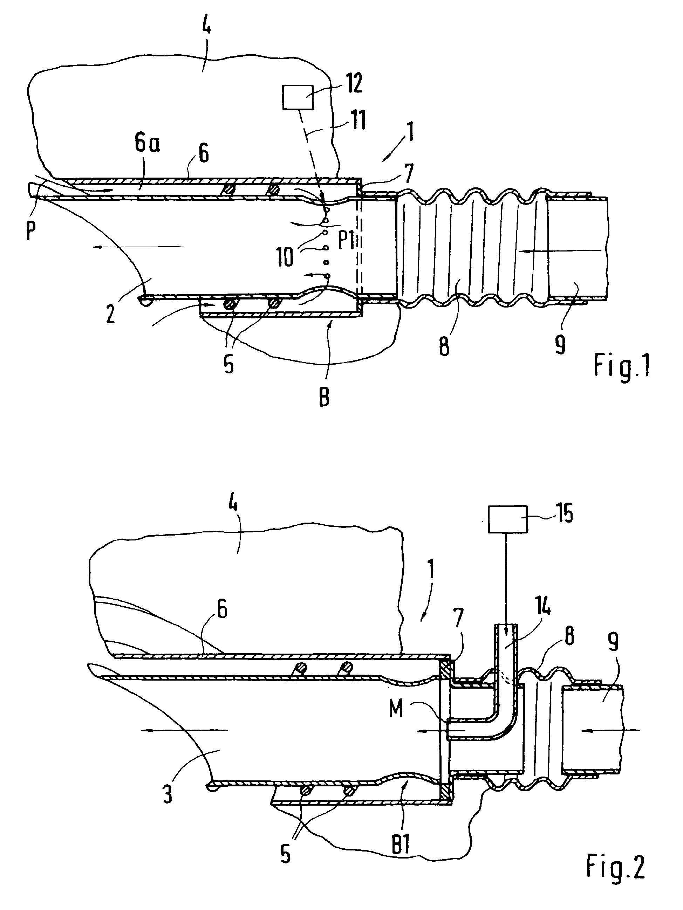

Das Abgasendrohr 2 gemäß der Ausführung nach Fig. 1 ist als so genanntes Venturirohr ausgeführt, d.h. es weist einen verengten, nach innen eingezogenen Bereich B mit Lufteintrittsöffnungen 10 gemäß Fig. 1 oder einem eingezogenen Bereich B1 ohne Lufteintrittsöffnungen 10 gemäß Fig. 2 auf.

Nach der Ausführung gemäß Fig. 1 wird Fremdluft bei Durchtritt von Abgasen durch das Abgasendrohr 2 von außen, wie die Pfeile P, P1 zeigen, ins Abgasendrohr 2 mitgerissen, so dass der Abgasstrom durch Zumischung von kalter Fremdluft abgekühlt wird und somit dieses Abgasendrohr 2 keine solche Wärme abstrahlt, die eine Verformung der Heckverkleidung 4 bewirken kann. Durch zusätzliche Zuführung von kalter Fremdluft über ein Luftleitrohr 11, welches mit einer lufterzeugenden Pumpe 12 verbunden ist, kann der Abgasstrom weiter heruntergekühlt werden. Das Luftleitrohr 11 ist von außen durch das rohrförmige Aufnahmeelement 5 gesteckt und mit seiner Mündung den Lufteintrittsöffnungen 10 zugerichtet, so dass die Fremdluft mittelbar dem Abgasendrohr 2 zuführbar ist. Diese Ausführung kann alternativ verwendet werden.

Nach der weiteren Ausführung gemäß Fig. 2 weist das Abgasendrohr 3 den eingezogenen Bereich B1 ohne die Lufteinströmöffnungen 10 auf. Die Fremdluft wird über ein Luftleitrohr 14, das mit einer Pumpe 15 verbunden ist, unmittelbar in das Abgasendrohr 3 eingeblasen und dem Abgas zugeführt. Wie in Fig. 2 des Weiteren zu erkennen ist, ist die Mündungsöffnung M des Luftleitrohres 14 in der Längsmittenachse des Abgasendrohres 3 stromauf des eingezogenen Bereichs B1 platziert, so dass eine Vermischung mit dem Abgasstrom erfolgen kann.

Das Abgasendrohr 2; 3 der beiden Ausführungen Fig. 1 und 2 kann sich somit nicht so stark erwärmen, dass eine Verformung der aus Kunststoff bestehenden Heckverkleidung 4 erfolgt und es ist auch keine Verschiebung aus seiner Position in der Aufnahme möglich, wobei Wärmeausdehnungen der stromauf gelegenen Abgasanlage 1 bzw. des Abgaseintrittsrohres 9 von dem zwischengeschalteten Wellrohr 8 bzw. Wellschlauch aufgenommen werden.

## Patentansprüche

1. Abgasanlage für einen Kraftfahrzeugmotor mit einem Abgasendrohr, an dem sich stromauf ein Wellrohr (8) oder ein Wellschlauch anschließt, der mit einem Abgaseingangsrohr (9) der Abgasanlage (1) verbunden ist, **dadurch gekennzeichnet, dass** das Abgasendrohr (2; 3) einen als Venturirohr mit Fremdluftzuführung (10; 11; 14) ausgebildeten Rohrabschnitt (B; B1) aufweist und das Abgasendrohr (2; 3) aus einer Heckverkleidung (4) oder einer Pelle herausragt.

2. Abgasanlage nach Anspruch 1, **dadurch gekennzeichnet, dass** die Fremdluftzuführung über ringförmig angeordnete Lufteintrittsöffnungen (10) des Abgasendrohres (2) im Rohrabschnitt (B) erfolgt.

3. Abgasanlage nach Anspruch 1, **dadurch gekennzeichnet, dass** die Fremdluftzuführung über ein eingeführtes Luftleitrohr (11) oder (14) erfolgt, das mit einer lufterzeugenden Pumpe (12; 15) verbunden ist.

4. Abgasanlage nach Anspruch 1, **dadurch gekennzeichnet, dass** die Fremdluftzuführung in Kombination über die Lufteintrittsöffnungen (10) und zusätzlich über ein Luftleitrohr (11; 14) erfolgt.

5. Abgasanlage nach einem der vorhergehenden Ansprüche, **dadurch gekennzeichnet, dass** das Abgasendrohr (2; 3) in einem rohrförmigen Aufnahmeelement (6) der Heckverkleidung (4) mit einem Luftspaltraum (6a) über Distanzhalter (5) angeordnet ist und zwischen dem Abgasendrohr (2; 3) und dem Aufnahmeelement (6) die Lufteintrittsöffnungen (10) in Verbindung mit dem Luftspaltraum (6a) stehen.

6. Abgasanlage nach einem der vorhergehenden Ansprüche, **dadurch gekennzeichnet, dass** der die Lufteintrittsöffnungen (10) aufnehmende Bereich (B) des Abgasendrohres (2) einen umlaufenden, das Abgasendrohr (2) verengenden Einzug nach dem Venturiprinzip aufweist.

7. Abgasanlage nach einem der vorhergehenden Ansprüche, **dadurch gekennzeichnet, dass** das Abgasendrohr (2; 3) über einen Flansch (7) mit dem rohrförmigen Aufnahmeelement (6) verbunden ist.

8. Abgasanlage nach einem der vorhergehenden Ansprüche, **dadurch gekennzeichnet, dass** die Lufteintrittsöffnungen (10) im Abgasendrohr (2) mit Fremdluft über ein Luftleitrohr (11; 14) beaufschlagbar sind, welches durch das rohrförmige Aufnahmelement (6) in der Heckverkleidung (4) hindurchragt und deren Mündungsöffnung den Lufteintrittsöffnungen (10) von außen zugerichtet ist.

9. Abgasanlage nach einem der vorhergehenden Ansprüche, **dadurch gekennzeichnet, dass** eine Fremdluftzuführung in das Abgasendrohr (3) ohne Lufteintrittsöffnungen (10) über das Luftleitrohr (14) erfolgt, das mit der Pumpe (15) verbunden ist und die Mündungsöffnung (M) des Luftleitrohres (14) stromauf einer Verengung (B1) nach dem Venturiprinzip im Abgasendrohr (3) und in der Längsachse dieses Abgasendrohres (3) angeordnet ist.

## Claims

1. An exhaust system for a motor-vehicle engine, with an exhaust tailpipe which is adjoined upstream by a corrugated pipe (8) or a corrugated tube connected to an exhaust inlet pipe (9) of the exhaust system (1), **characterised in that** the exhaust tailpipe (2; 3) has a pipe portion (B; B1) formed as a Venturi tube with an external air supply (10; 11; 14), and the exhaust tailpipe (2; 3) projects from a rear panel (4) or a skin.

2. An exhaust system according to claim 1, **characterised in that** the external air is supplied via annularly arranged air inlet openings (10) in the exhaust tailpipe (2) in the pipe portion (B).

3. An exhaust system according to claim 1, **characterised in that** the external air is supplied via an inserted air feed pipe (11) or (14) connected to an air-generating pump (12; 15).

4. An exhaust system according to claim 1, **characterised in that** the external air is supplied in combination via the air inlet openings (10) and, additionally, via an air feed pipe (11; 14).

5. An exhaust system according to any one of the preceding claims, **characterised in that** the exhaust tailpipe (2; 3) is arranged with an air gap (6a) in a tubular receiving member (6) of the rear panel (4) via spacers (5), and the air inlet openings (10) communicate with the air gap (6a) between the exhaust tailpipe (2; 3) and the receiving member (6).

6. An exhaust system according to any one of the preceding claims, **characterised in that** the region (B) of the exhaust tailpipe (2) has a circumferential indentation which narrows the exhaust tailpipe (2) in accordance with the Venturi principle, the region (B) containing the air inlet openings (10).

7. An exhaust system according to any one of the preceding claims, **characterised in that** the exhaust tailpipe (2; 3) is connected to the tubular receiving member (6) by a flange (7).

8. An exhaust system according to any one of the preceding claims, **characterised in that** the air inlet openings (10) in the exhaust tailpipe (2) can be acted upon by external air via an air feed pipe (11; 14) which projects through the tubular receiving member (6) in the rear panel (4) and the outlet opening of which is directed towards the air inlet openings (10) from outside.

9. An exhaust system according to any one of the preceding claims, **characterised in that** external air is supplied to the exhaust tailpipe (3) without air inlet openings (10) via the air feed pipe (14) connected to the pump (15), and the outlet opening (M) of the air feed pipe (14) is arranged upstream of a constriction (B1) according to the Venturi principle in the exhaust tailpipe (3) and is arranged on the longitudinal axis of this exhaust tailpipe (3).

## Revendications

1. Système d'échappement pour un moteur automobile avec un tuyau terminal de gaz d'échappement auquel se raccorde en amont un tuyau ondulé (8) ou un flexible ondulé, qui est relié à un tuyau d'entrée de gaz d'échappement (9) du système d'échappement (1) **caractérisée en ce que** le tuyau terminal d'échappement (2 ; 3) présente une partie de tuyau (B ; B1) conçue comme tube de Venturi avec arrivée d'air extérieur (10 ; 11 ; 14) et le tuyau terminal de gaz d'échappement (2 ; 3) dépasse d'un habillage arrière (4) ou d'une enveloppe.

2. Système d'échappement selon la revendication 1, **caractérisée en ce que** l'arrivée d'air extérieur s'effectue au moyen d'ouvertures d'entrée d'air (10) disposées selon un anneau du tuyau terminal de gaz d'échappement (2) dans la partie de tuyau (B).

3. Système d'échappement selon la revendication 1, **caractérisée en ce que** l'arrivée d'air extérieur s'effectue par un tuyau de guidage d'air (11) ou (14) introduit, qui est relié à une pompe (12 ; 15) envoyant de l'air.

4. Système d'échappement selon la revendication 1, **caractérisée en ce que** l'arrivée d'air extérieur s'effectue en combinaison par les ouvertures d'entrée d'air (10) et en supplément par un tuyau de guidage d'air (11 ; 14).

5. Système d'échappement selon l'une quelconque des revendications, **caractérisée en ce que** le tuyau terminal de gaz d'échappement (2 ; 3) est disposé dans un élément de logement (6) de forme tubulaire de l'habillage arrière (4) avec un espace formé par une fente d'air (6a) au moyen d'écarteurs (5) et les ouvertures d'entrée (10) sont en liaison avec l'espace en forme de fente d'air (6a) entre le tuyau terminal de gaz d'échappement (2 ; 3) et l'élément de logement (6).

6. Système d'échappement selon l'une quelconque des revendications précédentes, **caractérisée en ce que** la zone (B), recevant les ouvertures d'entrée d'air (10), du tuyau terminal de gaz d'échappement (2) présente une entrée périphérique, rétrécissant le tuyau terminal de gaz d'échappement (2) selon le principe de Venturi.

7. Système d'échappement selon l'une quelconque des revendications précédentes, **caractérisée en ce que** le tuyau terminal de gaz d'échappement (2 ; 3) est relié par une bride (7) à l'élément de logement (6) tubulaire.

8. Système d'échappement selon l'une quelconque des revendications précédentes, **caractérisée en ce que** les ouvertures d'entrée d'air (10) dans le tuyau terminal de gaz d'échappement (2) peuvent être alimentées avec de l'air extérieur au moyen d'un tuyau de guidage d'air (11 ; 14), lequel traverse l'élément de logement (6) de forme tubulaire dans l'habillage arrière (4) et son ouverture de débouché est orientée vers les ouvertures d'entrée d'air (10) par l'extérieur.

9. Système d'échappement selon l'une quelconque des revendications précédentes, **caractérisée en ce qu'**une ouverture d'air extérieur dans le tuyau terminal de gaz d'échappement (3) s'effectue sans ouvertures d'entrée d'air (10) au moyen du tuyau de guidage d'air (14), qui est relié à la pompe (15) et l'ouverture de débouché (M) du tuyau de guidage d'air (14) est disposée en amont d'un étranglement (B1) selon le principe de Venturi dans le tuyau terminal de gaz d'échappement (3) et dans l'axe longitudinal de ce tuyau terminal de gaz d'échappement (3).
